# EUROPEAN PATENT SPECIFICATION

(11) **EP 3 561 614 B1**
(45) Date of publication and mention of the grant of the patent: **26.01.2022**
(21) Application number: 18168816.9
(22) Date of filing: 23.04.2018
(51) Int. Cl.: G05B 13/02, G01N 27/90, G01N 29/04

(54) **PROCESS FOR TRAINING A SELF-LEARNING MACHINE IN A DEFECT MONITORING SYSTEM**
VERFAHREN ZUM TRAINIEREN EINER SELBSTLERNENDEN MASCHINE IN EINEM DEFEKTEN ÜBERWACHUNGSSYSTEM
PROCÉDÉ D'APPRENTISSAGE D'UNE MACHINE D'AUTO-APPRENTISSAGE DANS UN SYSTÈME DE SURVEILLANCE DE DÉFAUTS

(43) Date of publication of application: 30.10.2019
(73) Proprietor: Sensima Inspection Sàrl, 1196 Gland (CH)
(72) Inventor: Revaz, Bernard, 1205 Genève (CH); Santi, Gilles, 1007 Lausanne (CH); Lany, Marc, 1180 Rolle (CH); Frédéric, Monnier, 2016 Cortaillod (CH)
(74) Representative: P&TS SA (AG, Ltd.)

(56) References cited:
- US-A1- 2009 119 243
- US-A1- 2016 320 291
- US-A1- 2016 342 145

## Description

### Field of the invention

The present invention concerns a defect monitoring system for remote monitoring of assets, notably structures of assets.

In particular, the present invention concerns a defect monitoring system for remote assessment of the structural health of the monitored assets, e.g. structural health of structures of pipelines, vessels, bridges, buildings, dams, rails and heavy machineries and vehicles

### Description of related art

There is an increasing interest in monitoring weaknesses of structures so as to anticipate and avoid a catastrophic failure while continuing the safe exploitation of said structure.

Defect monitoring systems arranged to monitor structures for detecting and monitoring damages thereof are known from the state of the art, notably for structures providing containment of fluids as well as structures supporting permanent constructions, such as bridges, buildings and dams. These systems are configured to be semi-permanently or permanently installed on those structures and to provide a remote monitoring so as no operator *in situ* is necessary for collecting measurements.

CH710013 describes a defect monitoring system comprising an eddy sensor configured to monitor a metallic structure at regular time intervals and to trigger an alarm based on data provided by the eddy current sensor.

US5859537 and US6911828 disclose a corrosion detector being permanently attached to a structure and configured to be remotely interrogated for acquiring data.

US2002057097 and US8013600 describe monitoring devices having a power management system for regulating power consumption.

US2016/342145 describes a system for measuring, monitoring and controlling the performance of bridges. US2009/119243 relates to machine condition monitoring.US2016/320291 relates to heat exchanger fouling diagnosis in aerospace systems.

### Brief summary of the invention

The aim of the invention is to provide a defect measurement system monitoring the integrity of a structure and/or the evolution of defects of the structure in a more effective and efficient way than knowns monitoring systems.

According to the invention, these aims are achieved by means of the process for training a self-learning machine in a defect monitoring system of claim 1 and the defect monitoring system of claim 8. Dependent claims describing particular embodiments of the invention.

The proposed process and defect measurement instrumentation provide a defect monitoring system being able to sense and to predict events acting on the monitored structure so as to provide an adequate action during the event, in particular from the beginning of the incoming event. In particular, the defects monitored by the system are cracks induced by fatigue or corrosion, pitting, and/or manufacturing defects such as inclusions or porosity. The actions can comprise, notably, triggering an alarm, requesting further measurement, transmitting defect data to a remote device (e.g. a server) for further examination and a classification of the current state of the monitored defect. The system can also be deployed on a known weak spot of the structure where defects are likely to appear.

In one embodiment, the self-learning machine provides a decision data for triggering a measurement from the non-destructive defect monitoring system so as to provide a better power management of the systems and/or a reduction of the amount of data that must be processed, analysed and stored in the system for monitoring the integrity and/or the evolution of defects of structure.

### Brief Description of the Drawings

The invention will be better understood with the aid of the description of an embodiment given by way of example and illustrated by the figures, in which:
Fig. 1 shows a view of a defect monitoring system for monitoring a metallic structure of a bridge comprising a non-destructive defect measurement unit, according to the invention;
Fig.2 shows details of one of the non-destructive defect measurement channels of the non-destructive defect measurement unit of Fig.1;
Fig.3 shows details of the central unit of the non-destructive defect measurement unit of Fig.1, the central unit controlling the plurality of non-destructive defect measurement channels of the defect monitoring system;
Fig.4 shows a schematic view of the self-learning machine in self-learning mode of Fig 1; and
Fig. 5 shows a schematic view of the self-learning machine in the mode of operation of Fig.1.

### Detailed Description of possible embodiments of the Invention

The invention concerns a defect monitoring system for the remote surveillance a structure to permit an analysis and assessment of the integrity of critical portions of the structure (i.e. portions where a defect is likely to appear) as well as of evolutions of already detected defects, without requiring an operator *in situ* for collecting those measurements.

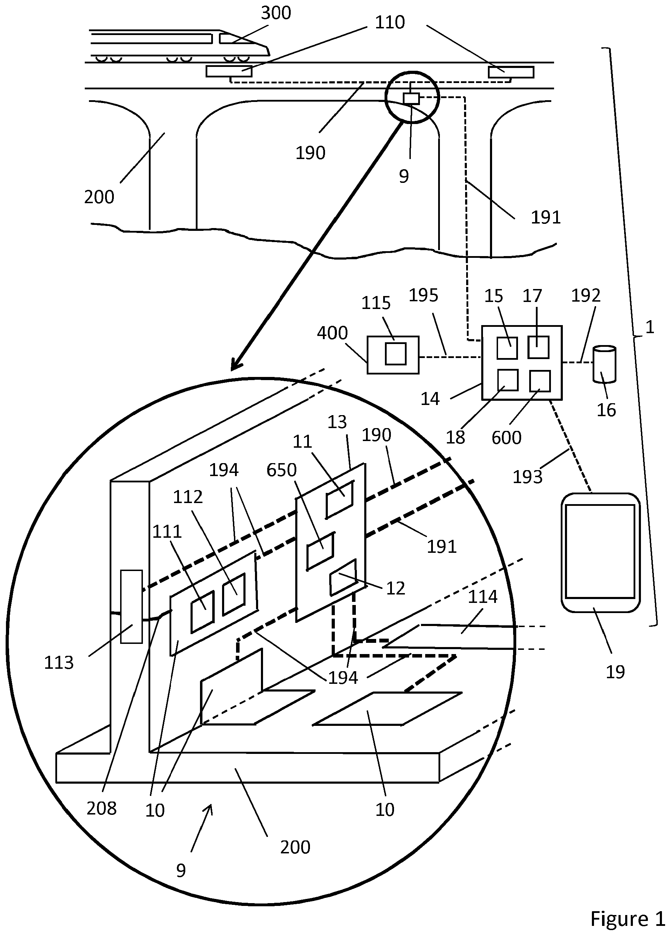

As illustrated in Figure 1, the defect monitoring system 1 comprises one or more non-destructive defect measurement units 9. A non-destructive defect measurement unit 9 is a unit configured and destined to evaluate properties of a material, component or system without causing damage, notably by using a nondestructive examination (NDE), nondestructive inspection (NDI), and/or nondestructive evaluation (NDE) technology.

Each non-destructive defect measurement unit 9 comprises one or more non-destructive defect measurement channels 10, each being configured to be applied to a distinct portion of the monitored structure 200 for sensing its integrity and/or the evolutions of a defect 208 thereof.

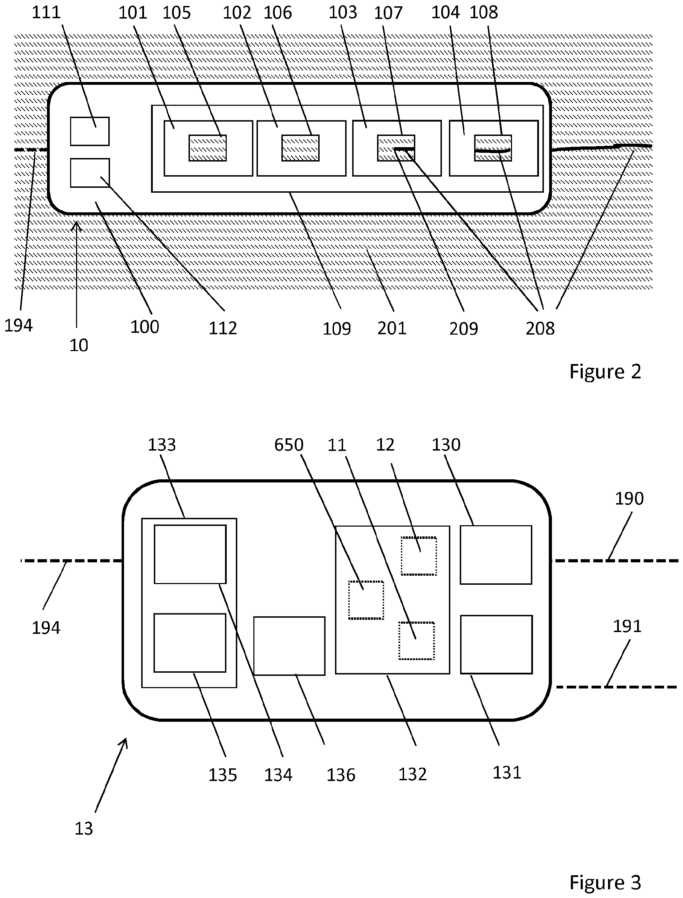

Advantageously, as illustrated in Figure 2, one or more of the non-destructive defect measurement channels 10 of the non-destructive defect measurement unit 9 comprises an eddy current sensor 109 (e.g. probe and instrument) for sensing eddy currents (also called Foucault currents) in metallic structures and/or metallic portions of structures, such as those of pipelines, vessels, bridges, buildings, dams, heavy machineries, rails and vehicles. A measurement of eddy currents in metallic portions provides support for detecting visually undetectable defects, in particular cracks, whose criticality are elevated in reason of their rapid evolution once they reached a critical size.

The eddy currents sensor 109 advantageously comprises a plurality of sensing elements 101-104, i.e. measurement coils, for sensing an evolution of a crack along a single or a plurality of directions. The measurement coils can be dimensioned, shaped and/or spatially arranged so as to support in a more efficient way the monitoring task of the detector. For example, a line of square- or rectangular shaped measurement coils permits to efficacy monitoring the evolution of a crack in a metal portion by centring one of this measuring coils on the crack head (i.e. a visible extremity of the crack, or the extremity of a crack determined by another non-destructive evaluation technique) while locating the other measurement coils along the crack propagation direction. In case the propagation direction of a crack is difficult to predict, an eddy currents detector having a line of rectangular-shaped measurement coils, the longer sides being located perpendicular the line of coils, can maximize the probability that the operational ranges of the measurement coils can cross the evolution of the crack. Alternatively, an eddy currents detector having an array of line of square-, circular-, arc- or rectangular-shaped measurement coils can provide an operational range along various directions. An eddy currents detector having a single or a plurality of concentric circular coils can provide a monitoring of a metallic portion and/or of a defect (notably a crack) that is independent from the propagation direction. Alternatively, a single or a plurality of concentric arc-shaped coils can provide a monitoring of defect that is independent from the propagation direction of the defect in a range of propagation angles (typically +/- 25°) if the arc-shaped coils subtend a greater angle than the range of propagation angles.

Advantageously, each sensing elements 101-104, e.g. measurement coil, is provided with a central opening 105-108 permitting a visual inspection of the monitored portion, notably of the crack evolution.

Alternatively or complementarily, one or more of the non-destructive defect measurement channels of the non-destructive defect measurement unit comprises an ultrasound sensor (e.g. instrument and probe) for sensing the defect, advantageously by means of a plurality of sensing elements. The ultrasound sensor allows to efficiently monitor defects being buried and/or consisting in a reduction of the section of the structure in a critical area.

Advantageously, the non-destructive defect measurement unit can be operated in a mode with a high data acquisition rate and/or live visual display of the measurements during the installation of the non-destructive defect measurement channel in order to locate said channel, notably the sensing element thereof, at a precise position relative to the defect, or at a location where the defect signal is maximized.

The defect monitoring system is configured so as to sense and/or to predict (anticipate) a human, automatic or environmental activity that causes (or could cause) a physical stress on the entire or on a portion of the structure. The sensing and/or prediction of these activities permit to provide an adequate action all long the event, in particular from the beginning of the incoming event. The actions can comprise, notably, triggering an alarm, requesting further measurement from one or more non-destructive defect measurement units and/or channels thereof, transmitting data that have been collected by the defect monitoring system for further examination and a classification of the current state of one or more monitored defect and/or portion of the structure.

Advantageously, the sensing and classification of these activities - their frequency and temporal patterns in particular - help providing a better assessment of the remaining lifetime of the monitored structure.

In order to sense and/or predict a human or environmental activity that causes (or could cause) a physical stress on the structure, the non-destructive defect measurement unit comprises an auxiliary detection module configured to collect other data concerning the monitored structure.

These other data are data incapable on one's own to support an assessment of the integrity and/or a status of a defect of the monitored structure, notably of a current status of the monitored defect. These other data comprise data devoid of information about the integrity and/or the defect of the monitored structure (e.g. temperature of the monitored structure and/or environmental temperature) and/or data uniquely providing an hint of an integrity and/or a defect of the monitored structure (e.g. a stress affecting a sensible portion of the structure or a monitored crack. These data are provided by one or more auxiliary detectors 110 sensing and/or predicting environmental events and/or human activities affecting the structure.

The one or more auxiliary detectors 110 can be arranged to provide
- a measure of a force acting to a portion of the structure being monitored by one or more non-destructive defect measurement units (e.g. channels thereof), such as a strain and a stress affecting (a portion of) the structure; and/or
- a measure of a temperature, an acceleration and/or a linear displacement of a portion of the structure being monitored by one or more non-destructive defect measurement units (e.g. channels thereof); and/or
- a detection of a mobile load acting on the structure.
- a measurement of terrain displacement /instability near the structure.
- a measurement of the erosion (scour) around a support of the structure.

The defect monitoring system is thus capable to sense (i.e. to infer) human or environmental activities by means of data collected by the one or more auxiliary detectors, via the auxiliary detection module. The defect monitoring system can thus provide a pre-defined action in response of data representing a pre-defined event that causes (or likely to cause) a deterioration of a monitored defect (e.g. crack) up to a formation of novel damages or defects (e.g. cracks) on the structure.

An auxiliary detector can be a temperature sensor that is operationally located on the structure, so as to provide a temperature of the structure, advantageously of a portion that is monitored by one or more non-destructive defect measurement channels. In fact, a variation of the temperature of a structure leads to expansion, respectively contraction of each component of the structure according to his volumetric coefficient of thermal expansion. This leads to a generation of multiple forces within the structure that could deteriorate defects (e.g. cracks) of the structure as well as generate novel damages or defects in the structure.

An auxiliary detector can be a linear displacement sensor, such as a linear variable displacement transducer ("LVDT"). This detector can be operationally located on the structure, so as to provide a relative displacement between two portions of the structures that could deteriorate up to generate novel damages or defects in the structure, e.g. two portions spatially separated by a weak portions or by a defect such as a crack.

An auxiliary detector can be an accelerometer configured to sense accelerations of (a portion of) the structure, about one or more direction, in particular about two or three orthogonal directions. The accelerometer may be located near non-destructive defect measurement channels the portion being monitored by at a distance from the defect detector, as the motion of the structure may be greater away from the maximum strain zones.

Accelerations and decelerations could negatively affect the structure, e.g. in case of a mobile or transportable structure. Moreover, the measurement provided by this detector permits to further derive not only velocities and relative positioning of the monitored portions but also vibrations affecting the monitored portion that could deteriorate up to generate novel damages or defects in the structure.

An auxiliary detector can be a strain gauge configured to sense excessive strain on (a portion of) the structure that could generate novel damages or defects in the structure, an increase in strain due to a reduction of the effective section of a structural portion and/or configured to sense a decrease in local strain due to the opening of a crack.

An auxiliary detector can be a detector of a mobile load acting on the structure, e.g.:
- a detector of a vehicle passing and/or standing and/or acting on a portion of a structure. The detector can be configured to detect a land vehicle, e.g. a wheeled, tracked, railed or skied vehicle, passing and/or standing on a structure, such those of a bridge or a multi-floor parking. The detector can be configured to detect an aircraft landing or standing on a structure such those of a landing strip or aircraft carrier. The detector can be configured to detect a watercraft floating on a portion of water delimited by a structure, e.g. those of a dam, sluice or harbour.
- a detector of a cargo loaded and/or carried on a structure, e.g. those of a machinery or vehicle.
- a detector of individuals accessing and/or standing on a structure, e.g. those of a building (e.g. stadium, arena, piling building), vehicle (e.g. passenger bus, wagon, airplane or boat).

Alternatively or complementarily, the one or more auxiliary detectors can be arranged to provide a prediction of human and/or environmental activity that could cause a physical stress on the structure, notably:
- a force and/or a vibration that will likely act on the portion of the structure being monitored by one or more non-destructive defect measurement channels; and/or
- a temperature, an acceleration, and/or a linear displacement that a portion will likely to manifest; and/or
- a mobile load (e.g. a vehicle, a cargo, an individual) that will likely to act on the structure.

Advantageously, the auxiliary detector measurements are computed to generate an equivalent load cycle count and load cycle frequency prediction that can be used to predict the rate of growth of the defect.

The defect monitoring system can thus collect predictions of human and/or environmental activities by means of data collected by the one or more auxiliary detectors, via the auxiliary detection module. The defect monitoring system can thus provide a pre-defined action in response of data forecasting an imminent pre-defined activity that could cause a deterioration of a monitored defect (e.g. crack) up to a formation of novel damages or defects (e.g. cracks) on the structure.

An auxiliary detector can be a device providing a weather forecasting service (i.e. prediction of states of atmosphere) in a region where the structure is located and/or will be placed.

An auxiliary detector can be a device providing alerts about weather hazard, such as wind, thunderstorms, rain, snow, heat wave and frost hazards.

An auxiliary detector can be a device providing alerts about natural catastrophically activity, such as earthquake, volcanic activity, and Tsunami.

An auxiliary detector can be a device providing planned human activities that could affect the structure, notably:
- timetables of public transport whose itinerary involve the monitored structure (e.g. train, bus, airplane services);
- planned production schedules;
- agenda or annual program of public and private events that could probably cause an aggregation of individual or vehicles acting on the monitored structure during predefined time intervals (e.g. theatre or matches season agenda);
- traffic signalisation (e.g. traffic light) that could cause a temporarily aggregation of vehicles on portions of the monitored structure;
- crowdsourced information, such as GPS information collected from vehicles;
- localization of radio signals according to one or more communication standards, such as wifi, Bluetooth or cellular signals, from infrastructures of users so as to estimate their number and/or speed.

Each of these auxiliary detectors can be part of a third party system, part of the monitored structure or a component of the defect monitoring system.

Advantageously, the defect monitoring system can be configured to detect and/or identify one or more pre-defined events that are particularly relevant in monitoring a particular structure, by means of a set of detecting parameters comprising at least one of the above-mentioned sensed, detected and/or predicted human or environmental activities, notably :
- a force acting on a portion of the structure;
- a temperature, an acceleration, a linear displacement of a portion of the structure;
- a mobile load acting on the structure;
- a terrain displacement and/or instability near the structure;
- an erosion (scour) around a support of the structure.

The detection of a pre-defined event can be determined by comparing data provided by the one or more auxiliary detectors with explicitly defined thresholds comprised in the sets of detection parameters.

A pre-defined event can be even detected by a threshold implicitly defined in a set of detection parameters. The detection of a pre-defined event can thus be based on thresholding, weighting or classifying data provided by the one or more auxiliary detectors, e.g. a multidimensional boundary or classifier. The set of detection parameters can thus define a single event or even a plurality of events.

Advantageously, the defect monitoring system comprises a self-learning machine for processing data provided by the non-destructive defect measurement channels and the auxiliary detector(s) (via the auxiliary detection module) for enabling and/or triggering one or more pre-defined actions. In particular, the self-learning machine can trigger and/or enable: a measure from one or more non-destructive defect measurement channels of one or more units of the defect monitoring system, a classification of at least one of the defects monitored by one of non-destructive defect measurement channel of one of the units, an alarm, and/or a transmission of defect data and/or auxiliary data provided by one or more non-destructive defect measurement channels and/or by the auxiliary detector(s) for further examination. The self-learning machine can have form of a clustering or multi-output artificial neuronal network.

The defect monitoring system can comprise a trigger module operationally connected to each of the non-destructive defect measurement channels 10 of one or more non-destructive defect units 9 for triggering a measurement from one or more of these measurement channels. The measurement can be simultaneously or sequentially triggered on more of the non-destructive defect measurement channels of the defect monitoring system. The measurement can be immediately triggered or scheduled for a late execution (e.g. delayed by a fixed or random time interval).

The trigger module is further arranged to set up and manage measurement configurations of each of the cracks detectors so as to trigger a measurement according to a selected or setup measurement configuration. The action of the trigger can be immediate or delayed by a fixed or random time interval.

Advantageously, the trigger module is configured to switch one or more of these non-destructive defect measurement units, notably one or more non-destructive defect measurement channels thereof, from a default operating mode (i.e. a first operating mode) to an accurate operating mode (i.e. a second operating mode) in response of a sensing or a prediction (anticipation) of a human or environmental activity that causes (or could cause) a physical stress on the entire or on a portion of the structure.

In the default operating mode, the non-destructive defect measurement unit (e.g. the one or more non-destructive defect measurement channels thereof) , can be configured to operate no measurement or measurements on a regular basis, generally with a subgroup of sensing elements of the non-destructive defect measurement channel, e.g. measurements coils.

The trigger module can be configured to wake-up the non-destructive defect measurement unit (e.g. the one or more non-destructive defect measurement channels thereof) on a regularly basis (i.e. at regularly time interval) for effectuating a single or a pre-defined sequence of measurements, eventually with a sub-group of measurement coils. In case of monitoring a crack, for example, the non-destructive defect measurement unit (e.g. channel) can be triggered for operating a measurement uniquely by means of the sensing elements (e.g. measurement coils) on the crack head and/or the first one on the direction of propagation of the crack.

The non-destructive defect measurement unit, e.g. the one or more non-destructive defect measurement channels thereof, can be placed, directly or via the trigger module, in a sleep mode (or low-power mode) once the measurement has been achieved up to a next measurement is triggered via the trigger module. In the sleep mode (or in the low-power mode), the non-destructive defect measurement unit (e.g. the one or more non-destructive defect measurement channels thereof) operates no measurement.

In the accurate operating mode, the non-destructive defect measurement unit (e.g. the one or more non-destructive defect measurement channels thereof) is configured to operate an immediate measurement. The measurement is generally executed by means of a bigger sub-group of sensing elements (e.g. measurement coils) up to all sensing elements (e.g. measurements coils) of one or more non-destructive defect measurement channels of the unit. Advantageously, the non-destructive defect measurement unit (e.g. channel one or more non-destructive defect measurement channels) can be configured to execute a sequence of successive measurements at time intervals being function of the sensed or anticipated human or environmental activity. Advantageously, a more precise measurement is obtained by increasing the excitation power, the sensitivity of the sensor (i.e. the ratio between the output signal and measured property) and/or by performing a more complex sequence of measurements involving for example changes in excitation frequency or sensor configuration.

The trigger module is thus operationally connected to the auxiliary detection module so as to switch the one or more non-destructive defect measurement units (e.g. one or more non-destructive defect measurement channels thereof) in response of a comparison of a data provided by the auxiliary detector with a predefined threshold.

The trigger module is thus operationally connected to the self-learning machine so as to switch the non-destructive defect measurement unit (e.g. one or more non-destructive defect measurement channels thereof) in response of a given trigger decision data outputted by the self-learning machine.

The trigger module provides thus adequate measurements of critical portions and/or defect thereof when the structure is or will be placed under a physical stress, i.e. when propagation or appearance of defects (e.g. cracks) is most likely to succeed.

Advantageously, the trigger module can be used to assess the damage (such as the increase in crack length) associated with a particular stress event by comparison of the defect measurement right before and after the trigger activation.

Advantageously, the trigger module can be configured to modify one or more measuring parameters of the auxiliary detector when switching the non-destructive defect measurement units from the first to the second operating mode, the one or more measuring parameters being function of the detected pre-defined event. This permit to adapt the measurement configuration to the particular typology of the detected pre-defined event, so as to ensure the accuracy and usefulness of the measurement data.

The trigger module can be advantageously configured to switch one or more non-destructive defect measurement units (e.g. one or more non-destructive defect measurement channels thereof) from the accurate operating mode (i.e. the second operating mode) to another operating mode after a pre-defined time interval from the time a pre-defined event has been detected or as function of data provided by the one or more non-destructive defect measurement channels and/or data provided by the auxiliary detector. Said other operating mode can be the default operating mode (i.e. the first operating mode) or a transitional operating mode wherein the non-destructive defect measurement unit (e.g. the one or more non-destructive defect measurement channels) is configured, for example, to operate measurement at increased time interval and/or using a smaller sub-group of sensing elements of the one or more non-destructive defect measurement channels (e.g. measurement coils).

The defect monitoring system further comprises a database module for collecting data provided by the non-destructive defect measurement channel(s) and data provided by the auxiliary detector.

Advantageously, the defect monitoring system is provided with an event analyser module having access to the database module so as to support the user, e.g. a specialist in charge of the monitoring of the structure, in the analysis of data, e.g. by providing data (i.e. filtering data) connected to a detected event and/or correlated with data provided by the auxiliary detector within a selected range.

The event analyser module permits the user to identify other significant events that occurred (i.e. events not being already listed in the list of the pre-defined events but outside of the usual statistical distribution of measurements) that have affected the structure, e.g. generated a physical stress thereon or caused a specific physical response of monitored portions or defects.

The defect monitoring system further comprises an event setup module for generating a set of detecting parameter for defining one or a set of events that could affect the monitored structure, e.g. for occurred events that have been observed and/or identified by means of data stored in the database.

Once (part of the) data of the database has been analysed by the user, those data can be used for training the self-learning machine of the defect monitoring system. The data can for example be flagged by the user as a signature of a critical event and used to train the self-learning machine to automatically generate an alarm if similar conditions should occur.

The self-learning machine is trained according to a training process that comprises steps of: collecting an input dataset, building a training dataset by pairing the input dataset with a corresponding training target dataset and training the self-learning machine with the training dataset.

The input dataset include collected defect (e.g. crack) data (thereafter reference defect data) of one or more reference defects of a structure and (auxiliary) data (thereafter reference auxiliary data) related to other parameters of the same structure.

The reference defect data can be provided by one or more non-destructive defect measurement units (e.g. channel thereof) of the defect monitoring system 1 sensing the reference defect(s), while the reference auxiliary data can be provided by the auxiliary detector connected to the defect monitoring system 1.

The reference defect data and/or the reference auxiliary data can alternatively or complimentarily comprise data being obtained by submitting at least one (preferably each) non-destructive defect measurement unit (NDT) of the defect monitoring system 1 to a standardized non-destructive testing (NDT) calibration procedure. This procedure involves a scan or a series of point measurements by means of the non-destructive defect measurement unit over a reference block with machined defects. These simulated defects are typically notches machined by electric discharge machining and/or holes machined conventionally.

In particular, reference defect data can be alternatively or complementarily generated (provided) by sensing a reference structure having a machined reference defect that advantageously simulates and/or represents acceptable and/or inacceptable defects. These reference defect and reference auxiliary data can be collected by means of one unit of the defect monitoring system 1 or by a standalone detector (e.g. in form of one or more non-destructive defect measurement units) dedicated to acquire reference data for training purpose.

The training dataset is built by pairing the reference defect data and/or the reference auxiliary data as input set with a corresponding training target dataset. The training target dataset comprises:
- decision data to trigger a measure from one or more of the non-destructive defect measurement units (notably from one or more channels thereof) of the defect monitoring system 1 the decision data can comprise data to switch each of the selected non-destructive defect measurement units from a first operating mode to a second operating mode; and/or
- a classification of said the one or more reference defects; and/or
- decision data to generate and/or trigger an alarm in/of the defect monitoring system 1; and/or
- decision data to trigger a communication for transmitting defect and/or auxiliary data provided by one or more of the non-destructive defect measurement units (notably from one or more channels thereof) and/or from the auxiliary detector of the defect monitoring system 1 to a remote device for further examination; and/or
- decision data to trigger a measure from one or more non-destructive defect measurement units comprises, in particular, a decision data to switch said non-destructive defect measurement unit (e.g. one or more non-destructive defect measurement channels thereof) from the first operating mode to the second operating mode.

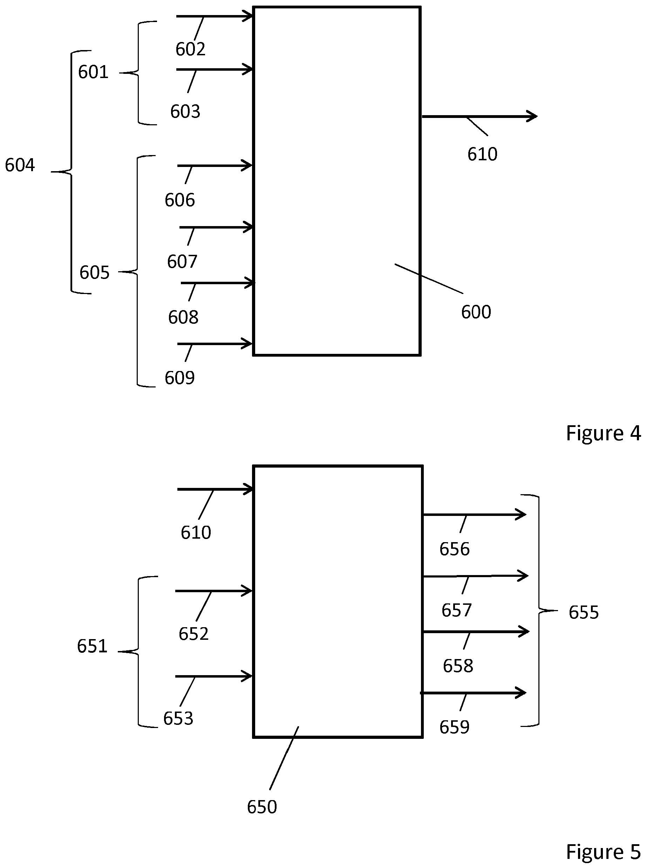

The self-learning machine, once trained, can be used to produce an output data set as function of data provided by the non-destructive defect measurement unit (e.g. channel(s) thereof) and by the auxiliary detector via the detection module of the defect monitoring system 1. According to the invention, the self-learning machine can be (indirectly) trained by integrating self-learned parameters 610 provided by another self-learning machine that was previously trained according to the above-mentioned process (cf. Figures 3 and 4).

The trained self-learning machine (either directly or indirectly) is thus operationally connected to each of the non-destructive defect measurement units (notably to each of the channels thereof) and to the auxiliary detection module of the defect monitoring system so as to provide an output data set comprising:
- a trigger decision data to trigger a measurement from one or more selected non-destructive defect measurement units (notably from one or more selected non-destructive defect measurement channels thereof) of the defect monitoring system 1,and/or
- a trigger decision to switch one or more selected the non-destructive defect measurement units from the first operating mode to the second operating mode, and/or
- a classification of one defect monitored by one or more of the non-destructive defect measurement units (e.g. by one or more channels thereof) of the defect monitoring system 1; and/or
- an alarm decision data for generating and/or triggering an alarm, e.g. via a user interface device 19 connected and/or part of the defect monitoring system 1; and/or
- a transmission decision data for transmitting defect data provided by one or more non-destructive defect measurement units (notably by one or more of the channels thereof) of the defect monitoring system 1 to a remote device for further examination; the remote device can be the user interface device 19 of the user (e.g. the specialist) and/or a server; the defect data can comprise a collection of data already provided by the non-destructive defect measurement unit(s) and/or data being currently provided by the non-destructive defect measurement unit(s) notably in response of (e.g. simultaneously to) a triggered measurement;
- a transmission decision data for transmitting auxiliary data provided by provided by the auxiliary detector of the defect monitoring system to a remote device for further examination; the remote device being advantageously the same remote device for the examination of defect data.

Figure 1 shows a view of an exemplary embodiment of a defect monitoring system 1 for monitoring a metallic structure 200 of a bridge 202 supporting a railroad, a road and a pedestrian passage.

In the illustrated embodiment, the defect monitoring system 1 comprises a single non-destructive defect measurement unit 9. The non-destructive defect measurement unit 9 comprises a central unit 13 operationally connected to a plurality of non-destructive defect measurement channels 10, each sensing a distinct portion of the structure 200.

One or more of these non-destructive defect measurement channels can comprise an array sensor for sensing an evolution of a defect along at least a direction, notably a crack, in a metallic structure.

A non-destructive defect measurement channels10 of the defect monitoring system 1 can be located on a distinct portion of the structure 200 in correspondence of an existing and already identified crack 208. Alternatively or complementarily, another non-destructive defect measurement channel 10 can be placed, for example, on weak and/or sensible metallic portions of the structures, such as connections or welds between metallic components of the structures.

Figure 2 illustrates an embodiment of the non-destructive defect measurement channel 10 being operationally fixed on a surface of a portion 201 of the structure 200 for monitoring the crack 208. The non-destructive defect measurement channel comprises an array sensor 109 in form of an eddy current sensor 109 having a plurality of sensing elements (i.e. measuring coils 101-104) aligned along a single line. Each sensing element (i.e. measuring coil) is provided with a central aperture 105-108 for providing a visual observation of the evolution of the crack under the sensing element.

The other non-destructive defect measurement channels of the illustrated the defect monitoring system 1 are also provided with an eddy current array sensor 109, whose sensing elements (i.e. measuring coils) could be differently sized and arranged according to other alignment schemes, e.g. aligned in concentric circles or in an array of adjacent measurement coils.

The figure 3 shows a preferred embodiment of the central unit 13 of the non-destructive defect measurement unit of Figure 1. The central unit 13comprises:
a trigger module 12 for triggering measurements from one or more of the non-destructive defect measurement channels 10, and
an auxiliary detection module 11 for collecting other data concerning the monitored structure 200 (i.e. data incapable on one's own to support an assessment of the integrity of the monitored structure and/or of a status of the monitored defect).

The central unit 13 comprises a processing unit 132, a data storage unit 130, a communication unit 131, an auxiliary sensors controlling unit 136 and a non-destructive defect measurement channels controlling unit 133 having a signals generating unit 134 and a signals measuring unit 135.

The processing unit 132, notably in form of a microprocessor or network of processors, is configured to control the units 130-131,133 of the central unit 13 and to execute operations and tasks required by the auxiliary detection module 11 and trigger module 12.

In particular, the processing unit 132 is operationally connected to the non-destructive defect measurement channels controlling unit 133 so as to control a generation of signals for separately and selectively stimulating the non-destructive defect measurement channels of the non-destructive defect measurement unit and to measure a response of each measurement coils to the stimulating signals. The collected data are temporarily stored in the data storage unit.

The auxiliary sensors controlling unit 136 is configured to control auxiliary sensors of the defect monitoring system 1, i.e. auxiliary sensors 111, 112 of the crack detecting units 10 and standalone auxiliary sensors 113,114, and to collect data thereof.

The processing unit 132 is operationally connected to the auxiliary sensors controlling unit 136 and to the communication unit 131 for collecting data providing:
- measurements and/or predictions of a force acting on one or more of the monitored portions of the structure, and/or
- measurements and/or predictions of a temperature, an acceleration and/or a linear displacement of one or more of the monitored portions of the structure; and/or
- detections and/or predictions of a mobile load 200 acting on the structure.;
- measurements of a terrain displacement and/or instability near the structure.
- measurements of an erosion (scour) around a support of the structure.

The defect monitoring system can comprises a server 14 operationally connected to each of the non-destructive defect measurement units 9 of the defect monitoring system 1 so as to collect defect data provided by the non-destructive defect measurement channels thereof and auxiliary data provided by the auxiliary detectors connected to (or parts of) the defect monitoring system 1 so as to store them in a database 16.

The server 14 can be operationally connected to other non-destructive defect measurement units 9 of other defect monitoring systems 1 so as to store collected defect and auxiliary data in the same database.

In the illustrated defect monitoring system 1, the remotely located server 14 is operationally connected to the non-destructive defect measurement unit 9, notably with the central unit 13 thereof, by a wired or wireless data channel 191. The server is configured to collect data provided by each of the non-destructive defect measurement channels 10 of the unit 9 and to store them on an operationally connected database 16. Data are collected by establishing a transmission of blocks of data that are temporarily stored in the data storage unit 130 of the central unit 13, e.g. by means of regular transmission or scheduled transmissions of data as well as an on-demand transmission required by the server or by the central unit 13.

The central unit 13 can be connected to a plurality of auxiliary detectors, each being for example part of the monitored structure, of the defect monitoring system 1, or part of other (standalone) systems.

The illustrated central unit 13 is also connected to one or more of auxiliary detector being part of the defect monitoring system, in particular for providing common data concerning the monitored structure, such as accelerations, temperatures, displacements, forces and pressures affecting the monitored structure, notably by means of one or more accelerometers 111, one or more temperatures sensors 112, by one or more linear displacement sensor 113, and/or by one or more strain gauges 114.

The temperature sensor 112 provides not only an information about potential force acting on the monitored structure but also a corrections of measurements provided by non-destructive measurement channels of the unit 9.

The linear displacement sensor 113 can have a form of a linear variable displacement transducer (LVDT) that relatively operates, for example, on parts separated by the monitored crack 108 or on two points of the structure (e.g. an area) that is submitted to significant stress.

In the illustrated embodiment, the central unit 13 is also connected to first and a second vehicle detector 110, via the auxiliary detection module 11 and a data link, for collecting data about railed and/or road vehicles passing and/or temporarily staying on the bridge 202. These vehicle detectors 110 can be part of a railroad or road infrastructure, of the structure or of the defect monitoring system 1.

Alternatively or complementarily, the auxiliary detection module 11 can have access, for example through the remote server 14, to a device 400 providing third party's data service. In particular, the server 14 can be configured to access a data provider by means of a system of interconnected computer network 195 and to provide the collected data to the auxiliary detection module 11 through the datalink connecting the server 14 and the central unit 13.

The device 400 of Figure 1 is, for example, configured to provide public transport timetables 115 and/or traffic information about public railroad and/or wheeled transport vehicles passing and/or stopping on the bridge 202.

Complementarily, the server can be configured to access and collect data from another data provider so as to provide the auxiliary detection module 11 with data concerning alerts about weather hazard, (e.g. wind, thunderstorms, rain, snow, heat wave and frost hazards) and/or natural activity (e.g. earthquake, volcanic activity, land slide, settlement, scour, erosion and Tsunami).

In case of monitoring a structure being a bridge, the trigger module 12 (in form of an executable operations executable by the microcontroller 132) is configured to detect a list of predefined events by comparing data provided by the auxiliary detector with respect to a threshold value, e.g.:
- a higher temperature event that is characterized, for example, by a temperature of the monitored structure overpassing a pre-define maximum temperature threshold, typically comprised in a range from 60°C to 100 °C;
- a lower temperature event that is characterized, for example, by a temperature of the monitored structure that is lower than a pre-define minimal temperature threshold, typically comprised in a range from -1°C to -30 °C;
- a vibration event that is characterized, for example, by a vibration of the monitored portion overpassing a pre-defined maximum frequency threshold (e.g. comprised in a range from 0.1 HZ to 1 Hz) and/or pre-defined amplitude (e.g. comprised in a range from 1 mm to 10 mm) in a pre-defined frequency range. Alternatively or complementarily, the vibration event can be characterized by a weighed integral of acceleration amplitudes over a certain frequency range exceed a pre-defined threshold;

- a damping or characteristic motion event that is characterized by acceleration signals exhibiting one of a predefined altered patterns.
- a displacement event that is characterized, for example, by a relative displacement of portions of the structure being higher than a pre-defined maximal displacement threshold, typically comprised in a range from 0.1 mm to 1 mm or exceeds a previously recorded maximum displacement;
- an over pressure event that is characterized, for example, by a force or pressure acting between connected portions, eventually separated by a crack, that exceeds a pre-define maximum force/pressure threshold;
- a vehicle detection event characterized by a detection of at least one vehicle passing and/or staying on the structure;
- a weather hazard event characterized by an alert of at least one weather hazard (e.g. wind, thunderstorms, rain, snow, heat wave and frost hazards) for a geographical region comprising the bridge or structure or corresponding to the watershed uphill of the structure;
- a natural catastrophically event characterized by an alert about at least one natural catastrophically activity (e.g. earthquake, volcanic activity, and Tzunami) for a geographical region comprising the bridge.

The trigger module is configured, once one or more of the pre-defined events is detected based on data provided by the auxiliary detector to switch one or more non-destructive defect measurement channels 10 of the non-destructive defect measurement unit 9 from the default operating mode to a the accurate one so as to guarantee accurate measurements that cover the entire duration of event that are affecting or could affect the structure. Advantageously, the trigger can be configured to take a precise measurement by means of the non-destructive defect measurement unit (one or more channels thereof) before and after a predicted event in order to assess the degradation of the structure associated with said event. Alternatively, the non-destructive defect measurement unit (e.g. one or more channel thereof) could be switched to a high precision and/or high acquisition rate for the whole predicted duration of the event.

Complementarily, the trigger module is configured to switch the non-destructive defect measurement unit (e.g.one or more non-destructive defect measurement channels) from the default operating mode to an accurate operating mode in response of data thereof providing hint of an integrity break or propagation of a defects is in course.

In the default operating mode, each non-destructive defect measurement unit can be configured to measure the portion at a regular or scheduled time intervals, eventually by means of a subset of the measurement channels of the non-destructive defect monitoring system. A self-test routine can also be scheduled at regular time intervals to ensure the non-destructive measurement channels are in working condition, i.e. that their performance still corresponds to the bounds imposed by the non-destructive testing standard. In case the defect monitoring system is monitoring a crack with a non-destructive defect measurement channel having an array of sensing element (e.g. eddy current coils 208, Figure 2), the measurements can be effectuated by means of a subset of the measurement coils 101-104 of the non-destructive defect measurement channel10. The subset comprises the measurement coil 103 located on the crack head 208 and/or the first the measurement coil 102 located on the direction of propagation of the crack. In the time interval between regularly or scheduled measurements, each non-destructive defect measurement channel is advantageously placed in sleep power mode (or low-power mode).

In the accurate operating mode, the non-destructive defect measurement unit can be configured to effectuate immediate measurements with all measurements coils of each non-destructive defect measurement channel. The non-destructive defect measurement unit (channel) can be configured to execute either a single measurement (single-shot operating mode) or a sequence of successive measurements at time intervals being function of the sensed or anticipated human or environmental activity (sequence operating mode). For example; in case of the higher temperature event, lower temperature event, weather hazard event and natural catastrophically event, the non-destructive defect measurement unit (e.g. each non-destructive defect measurement channel) is configured to execute a block of successive measurement at a predefined time interval (preferably within a range from 15 seconds up to 1 hour), the block comprises 10-1000 successive measurements at a sampling frequency comprises in a range of10 Hz -5000 Hz.

An alternate measurement mode involves a high frequency acquisition of a specific element of the sensor array proximal to the defect and/or giving a maximum response to an increase in severity of the defect. For example, in the case of an eddy current sensor array where the increase on length of the crack is of interest, an alternate measurement mode involves increasing the acquisition rate of the channel corresponding to the coil located above the tip of the cracks. If an increase in depth of the crack or an opening of the crack is of interest, the sensor located above the crack is read out at an increased rate. If material changes (pre-cracking) are of interest, the sensor on front of the crack is read out at an increased rate.

An alternate accurate operating mode involves more frequent self-tests associated with an increased measurement rate

The illustrated defect monitoring system 1 is also provided with a self-learning machine 600 in self-learning mode and a self-learning machine 650 in the mode of operation (cf. Figures 1, 4 and 5).

The self-learning machine 600 is destined (i.e configured) to infer parameters 610 from collected defect and auxiliary data, e.g. from data collected in the database 16 of the defect monitoring system 1.

The trained self-learning machine 650 is then configured to produce an output data set 655 as function of data 651 provided by the non-destructive defect measurement channel(s) and by the auxiliary detection module of the defect monitoring system, according to the inferred parameters 610.

In the exemplary embodiment of Figure 1, the self-learning machine 600 in self-learning mode is operationally located in the server 14, while the self-learning machine 650 in the mode of operation is operationally located in the non-destructive defect measurement unit 9, notably in his central unit 13 (Fig.1).

According to the invention, the self-learning machine 600 in self-learning mode and the self-learning machine 600 in mode of operation can be distinct machines or a same machine capable to operate in the self-learning mode and in mode of operation. The self-learning machine 600 in self-learning mode and/or the self-learning machine 600 in mode of operation can be operationally located within the non-destructive defect measurement unit 9 and/or remotely in the server 14.

The self-learning machine 600 can be advantageously trained by the above-mentioned process..

The first step of the training process is collecting an input dataset 601 including reference defect data and reference auxiliary data.

The reference defect data and reference auxiliary data can be, as previously described, provide by the same defect monitoring system 1, by another defect monitoring system, and/or by a standalone detector.

The reference defect data and reference auxiliary data can thus be related to a monitored defect and/or to a reference defect obtained, for example, by machining on a test piece, notably according to a reference standard.

Complementarily, the reference defect data and reference auxiliary data can comprises simulated defect data and auxiliary data obtained by simulating one or more reference defect by means of computer simulations.

The input dataset 601 can, alternatively or complementarily, include:
- reference data obtained by sensing zones of the monitored structure known to be exempt of the defect; and/or
- historical data such as weather records in the area of the structure; and/or
- monitoring data gathered on other structures; and/or
- simulation data predicting spatial and temporal patterns of the motion, strain/stress and/or of temperature of the structure.

The step of building a training dataset 604 comprises step of pairing the reference defect data and/or the reference auxiliary data as input set with a corresponding training target dataset 605.

The training target dataset 605 comprises:
- a decision data 606 to trigger a measure from the non-destructive defect measurement channel(s) providing similar defect data, and/or
- a decision data for performing change of mode of operation of the non-destructive defect measurement unit (e.g. channels), and/or
- a classification 607 of at least one of the reference defects; and/or
- a decision data 608 for generating an alarm; and/or
- a decision data 609 for transmitting defect data previously and/or currently provided by the non-destructive defect measurement unit (10, 13) for further examination;
- a decision data 609 for transmitting auxiliary data previously and/or currently provided by auxiliary detector for further examination;
- A decision data 609 for transmitting additional data for further examination, such as detected events, an observed defect growth, and an impact of an observed defect growth on a motion of the structure.

The decision data 606 to trigger a measurement from the non-destructive defect measurement unit (channels) comprises a decision data to switch the non-destructive defect measurement unit 10 from the first operating mode to the second operating mode.

The process further comprises a step of training the self-learning machine 600 with this training dataset 604.

In the illustrated embodiment of the defect monitoring system 1, the trained self-learning machine take a form of the self-learning machine 650 in the mode of operation that implements a set of self-learned parameters 610 obtained by the self-learning machine 600 by means of the above-described process. In the illustrated embodiment, the self-learning machine 650 has a form of a list of operations executable by the microprocessor 132.

The trained self-learning machine 650 is thus operationally connected to the non-destructive defect measurement unit, notably to the non-destructive defect measurement channels 10, and to the auxiliary detection module 11 of the defect monitoring system so as to provide an output data set, notably comprising a trigger decision data 606 to trigger a measurement from one or more non-destructive defect measurement channels 10 of the defect monitoring system 1.

The trigger decision data is thus provided to the trigger module so as to manage the non-destructive defect measurement channels of the defect monitoring system as function of the trigger decision data. In particular, the trigger decision data comprises a command for requiring a switching of a set of non-destructive defect measurement channels from the first operating mode to the second operating mode, the set of non-destructive defect measurement channels being defined by the trigger decision data.

The output data set can further comprise a classification 607 of one or of a set of monitored defects; and/or an alarm decision data 608 for generating an alarm. The classification and/or the alarm can be transmitted to the user and/or an operator by means of the communication unit 131, eventually trough the server 14 and/or the user interface device 19.

The output data set can further comprise a transmission decision data 609 for transmitting data provided by one or more non-destructive defect measurement channels for further examination. The central unit can be thus configured to, in response of transmission decision data requiring a transmission of data provided by one or more non-destructive defect measurement channels, require and establish a communication with the server 14 so as to transmit them the selected data that are in the meanwhile stored in the data storage unit 130 of the central unit 13.

Advantageously, the interface displays the measurement data in a format which is compliant with the relevant NDT standard.

The server 14 comprises an event analyser module having access to collected data in the database 16.The event analyser module is thus configured to permit the user to observe and analyse collected data, eventually by means of a user interface device, such as a mobile device 19. In particular, the event analyser module 17 permits the user to filtering data according to data provided by auxiliary detectors and/or by detected events.

The server 14 comprises an event setup module 15 for generating a set of detecting parameters for detecting one or more events that have been observed and/or identified by means of data stored in the database. The server can be configured to electronically transmit the generated set of detecting parameters from the event setup module 15 to the trigger module 12 so as to provide detection of these events.

Complementarily, the trigger module is configured to receive a request signal from the server for requesting an immediate measurement by a set of non-destructive defect measurement channels, the set of non-destructive defect measurement channels being defined in the request signal. In response of a reception of this request signal, the trigger module is configured to switch each non-destructive defect measurement channel of the set from the default operating mode to the accurate operating mode (single-shot, self-test or sequence operating mode).

The server comprises thus a remote trigger module 18 permitting the user, eventually via the user interface device 19, to select a set of non-destructive defect measurement channels of the defect monitoring system and to trig an immediate measurement on the non-destructive defect measurement channels of the set and/or to setup a measuring schedule of measuring for the non-destructive defect measurement channels of the set.

### List of reference numerals and abbreviations used in figures

- 1: Defect monitoring system
- 9: Non-destructive defect measurement unit
- 10: Non-destructive defect measurement channel
- 100: Flexible PCB
- 101-104: Measurement coil
- 105-108: Overture of the measurement coil
- 109: Eddy current sensor
- 11: Auxiliary detection module
- 110: Vehicle detector
- 111: Accelerometer
- 112: Temperature sensor
- 113: Linear displacement sensor
- 114: Strain gauge
- 115: Public transport timetable
- 12: Trigger module
- 121: Machine Learning module
- 122: Machine Learning for the trigger module
- 13: Central Unit of the non-destructive defect measurement unit
- 130: Data storage unit
- 131: Communication unit
- 132: Microprocessor
- 133: Controlling unit of the non-destructive defect measurement channels
- 134: Signals generating unit
- 135: Signals measuring unit
- 136: Auxiliary Sensors controlling unit
- 14: Server
- 15: Event setup module
- 16: Database
- 17: Event analyser module
- 18: Remote trigger module
- 19: User interface device
- 190, 194: Local Data link
- 191,193: Bi-directional data link
- 192: Database data link
- 195: Interconnected computer network
- 200: Metallic structure
- 201: Portion of the structure
- 208: Crack of a portion of the structure
- 209: Crack head
- 300: Vehicle
- 400: Public transport timetable service
- 600: Self-learning machine
- 601: input dataset
- 602: crack data
- 603: auxiliary data
- 604: training dataset
- 605: training target dataset
- 606: decision data to trigger a measure
- 607: defect classification
- 608: decision data for generating an alarm
- 609: decision data for transmitting crack data
- 610: parameter of the self-learning machine
- 650: Trained self-learning machine
- 651: input dataset
- 652: crack data
- 653: auxiliary data
- 655: output dataset
- 656: decision data to trigger a measure
- 657: defect classification
- 658: decision data for generating an alarm
- 659: decision data for transmitting crack data
- 660: parameters for data making machine

## Claims

1. Process for training a self-learning machine (600) in a defect monitoring system (1) for a remote surveillance of a monitored structure (200); the defect monitoring system (1) comprising a non-destructive defect measurement unit (9) comprising an eddy current sensor (109) and/or an ultrasound sensor for sensing a defect of the monitored structure, and the defect monitoring system (1) being configured to collect auxiliary data from an auxiliary detector (110-115); the auxiliary detector (110-115) being configured to:
measure and/or predict a force acting on a portion of the monitored structure (200); and/or
measure and/or predict a temperature, an acceleration and/or a linear displacement of a portion of the monitored structure (200); and/or
detect or predict a mobile load acting on the monitored structure (200); and/or
detect or predict a terrain displacement and/or instability near the monitored structure; and/or
detect or predict an erosion or scour around a support of the monitored structure;
the process comprising steps of:
a) Collecting an input dataset (601) including:
reference defect data (602) of a reference defect (208) of the monitored structure (200) or of a reference structure; and
reference auxiliary data (603) of other parameters of the same monitored or reference structure;
b) Building a training dataset (604) by pairing said reference defect data (602) and/or said reference auxiliary data (603) as input set with a corresponding training target dataset (605);
c) Training the self-learning machine (600) of the defect monitoring system (1) with said training dataset (604);
wherein the training target dataset (605) comprises:
decision data (606) to trigger a measure from the non-destructive defect measurement unit (9) of the defect monitoring system (1), and/or
a classification (607) of the reference defect of the monitored or reference structure (200) and/or
decision data (608) to generate and/or trigger an alarm of the defect monitoring system (1); and/or
decision data (609) to trigger a transmission of defect data provided by the non-destructive defect measurement unit (9) of the defect monitoring system (1) for further examination; and/or
decision data (609) to trigger a transmission of auxiliary data provided by the auxiliary detector (110-115) for further examination.

2. The process according to claim 1, wherein said decision data (606) to trigger a measure from the non-destructive defect measurement unit (10) comprises decision data to switch the non-destructive defect measurement unit (9) from a first operating mode to a second operating mode.

3. The process according to claim 2, the first operating mode being a sleep power mode in which the non-non-destructive defect measurement unit (9) is configured to operate no measurement, and the second operating mode being a waked mode in which the non-destructive defect measurement unit (9) is configured to operate measurements.

4. The process according to any one of claims 1 to 3, wherein the eddy and/or ultrasound sensor comprising a plurality of sensing elements (101-104).

5. The process according to claim 1, wherein the auxiliary detector comprises: an accelerometer (111), a temperature sensor (112), a linear displacement sensor (113), a strain gauge (114), a vehicle detector, a traffic light signal device and/or a device providing data about planned human activities that could affect the monitored structure (200), in particular about a timetable of a public transport service.

6. The process according to any one of claims 1 to 5, wherein said reference defect of the monitored or reference structure (200) is a machined reference defect representing an acceptable and/or inacceptable defect.

7. The process according to any one of claims 1 to 6,
said reference defect data (602) being provided by the non-destructive defect measurement unit (9) of the defect monitoring system (1) and/or by another non-destructive defect measurement unit (9) sensing said reference defect, and/or
said reference auxiliary data (603) being provided by the same auxiliary detector (110-115) providing auxiliary data to the defect monitoring system (1) and/or by another auxiliary detector (110-115) sensing or predicting said other parameters.

8. A defect monitoring system (1) for monitoring a structure (200), comprising:
a non-destructive defect measurement unit (9) for sensing a defect (208) of a monitored structure (200), the non-destructive defect measurement unit (9) comprising an eddy current sensor (109) and/or an ultrasound sensor for sensing a metallic portion of said structure (200); the non-destructive defect measurement unit (9) providing defect data (652);
an auxiliary detection module (11) configured to collect auxiliary data (653) from an auxiliary detector (110-115), the auxiliary detector being configured to:
measure and/or predict a force acting on a portion of the monitored structure (200); and/or
measure and/or predict a temperature, an acceleration and/or a linear displacement of a portion of the monitored structure (200); and/or
detect or predict a mobile load acting on the monitored structure (200); and/or
detect or predict a terrain displacement and/or instability near the monitored structure; and/or
detect or predict an erosion or scour around a support of the monitored structure;
a self-learning machine (600, 650) operationally connected to the non-destructive defect measurement unit (9) and to the auxiliary detection module (11); the self-learning machine being trained by a process according to any one of claim 1 to 7 so as to provide an output data set (655) in response of an input dataset (651) comprising said defect data (652) and said auxiliary data (653), wherein the output data set (655) comprises:
trigger decision data (656) to trigger a measure from the non-destructive defect measurement unit (9),and/or
a classification (657) of the defect monitored by the non-destructive defect measurement unit (9); and/or
alarm decision data (608) to generate and/or trigger an alarm of the defect monitoring system (1); and/or
transmission decision data (609) to trigger a transmission of the defect data (652) provided by the non-destructive defect measurement unit (9) for further examination; and/or
transmission decision data (609) to trigger a transmission of the auxiliary data (653) provided by the auxiliary detection module (11) for further examination.

9. The defect monitoring system of the claim 8, the eddy current sensor and/or an ultrasound sensor comprising a plurality of sensing elements, preferably in form of measurement coils (101-104).

10. The defect monitoring system of the claim 8 or 9, comprising a trigger module (12) operationally connected to the non-destructive defect measurement unit (9) and to the self-learning machine (650) and/or to auxiliary detection module (11);
the trigger module (12) being configured to switch the non-destructive defect measurement unit (9) from a first operating mode to a second operating mode as a function of said trigger decision data (656) provided by the self-learning machine (650) and/or in response of a comparison of one or more of said auxiliary data with a pre-defined threshold.

11. The defect monitoring system of claim 10, wherein, with respect to measurement operated in the first mode in the second mode the non-destructive defect measurement unit (10, 13) is configured to operate measurements with:
more sensing elements of the non-destructive defect measurement unit (9); and/or
an increased detection sensitivity of the non-destructive defect measurement unit (9); and/or
an increased detection sensitivity of the sensing elements the non-destructive defect measurement unit (9).

12. The defect monitoring system of claim 10 or 11, the first operating mode being a sleep power mode in which the non-destructive defect measurement unit (9) is configured to operate no measurement, and the second operating mode being a waked mode in which the non-non-destructive defect measurement unit (9) is configured to operate measurements.

13. The defect monitoring system of any one of claims 8 to 12, the auxiliary detector comprising an accelerometer (111), a temperature sensor (112), a linear displacement sensor (113) and/or a strain gauge (114).

14. The defect monitoring system of any one of claims 8 to 13, the auxiliary detector comprising a vehicle detector (110) and/or a traffic light signal device and/or a device providing data about planned human activities that could affect the structure, in particular about a timetable of a public transport service.

## Patentansprüche

1. Prozess zum Trainieren einer selbstlernenden Maschine (600) in einem Defektüberwachungssystem (1) für eine Fernüberwachung einer überwachten Struktur (200); wobei das Defektüberwachungssystem (1) eine nicht-zerstörende Defektmesseinheit (9) aufweist, aufweisend einen Wirbelstromsensor (109) und/oder einen Ultraschallsensor zum Erfassen eines Defekts der überwachten Struktur, und wobei das Defektüberwachungssystem (1) dazu ausgelegt ist, Hilfsdaten von einem Hilfsdetektor (110-115) zu sammeln; wobei der Hilfsdetektor (110-115) dazu ausgelegt ist, um:
eine Kraft, die auf einen Teil der überwachten Struktur (200) wirkt, zu messen und/oder zu schätzen; und/oder
eine Temperatur, eine Beschleunigung und/oder eine lineare Verschiebung eines Teils der überwachten Struktur (200) zu messen und/oder zu schätzen; und/oder eine mobile Last, die auf die überwachte Struktur (200) wirkt, zu ermitteln oder zu schätzen; und/oder
eine Terrainverschiebung and/oder eine Instabilität nahe der überwachten Struktur zu ermitteln oder zu schätzen; und/oder
eine Erosion oder einen Abrieb um eine Halterung der überwachten Struktur herum zu ermitteln oder zu schätzen;
wobei der Prozess folgende Schritte aufweist:
a) Sammeln eines Input-Datensatzes (601), aufweisend:
Referenzdefektdaten (602) eines Referenzdefekts (208) der überwachten Struktur (200) oder einer Referenzstruktur; und
Referenzhilfsdaten (603) anderer Parameter von derselben überwachten Struktur oder Referenzstruktur;
b) Erstellen eines Trainingsdatensatzes (604) durch ein Paaren erwähnter Referenzdefektdaten (602) und/oder erwähnter Referenzhilfsdaten (603) als Input-Datensatz mit einem entsprechenden Trainingsziel-Datensatz (605);
c) Trainieren der selbstlernenden Maschine (600) des Defektüberwachungssystems (1) mit erwähntem Trainingsdatensatz (604);
wobei der Trainingsziel-Datensatz (605) aufweist:
Entscheidungsdaten (606), um eine Massnahme von der nicht-zerstörenden Defektmesseinheit (9) des Defektüberwachungssystems (1) auszulösen, und/oder
eine Klassifizierung (607) des Referenzdefekts der überwachten Struktur (200) oder der Referenzstruktur und/oder
Entscheidungsdaten (608), um einen Alarm des Defektüberwachungssystem (1) zu generieren und/oder auszulösen; und/oder
Entscheidungsdaten (609), um eine Übertragung von Defektdaten, die von der nicht-zerstörenden Defektmesseinheit (9) des Defektüberwachungssystems (1) bereitgestellt werden, für eine weitere Untersuchung auszulösen; und/oder
Entscheidungsdaten (609), um eine Übertragung von Hilfsdaten, die vom Hilfsdetektor (110-115) bereitgestellt werden, für eine weitere Untersuchung auszulösen.

2. Der Prozess gemäss Anspruch 1, wobei erwähnte Entscheidungsdaten (606), um eine Massnahme von der nicht-zerstörenden Defektmesseinheit (10) auszulösen, Entscheidungsdaten aufweisen, um die nicht-zerstörende Defektmesseinheit (9) von einem ersten Betriebsmodus in einen zweiten Betriebsmodus zu schalten.

3. Der Prozess gemäss Anspruch 2, wobei der erste Betriebsmodus ein Energiesparmodus ist, in dem die nicht-zerstörende Defektmesseinheit (9) dazu ausgelegt ist, keine Messung durchzuführen, und wobei der zweite Betriebsmodus ein Wachmodus ist, in dem die nicht-zerstörende Defektmesseinheit (9) dazu ausgelegt ist, Messungen durchzuführen.

4. Der Prozess gemäss einem der Ansprüche 1 bis 3, wobei der Wirbelstrom- und/oder Ultraschallsensor eine Vielzahl von Sensorelementen (101-104) aufweist.

5. Der Prozess gemäss Anspruch 1, wobei der Hilfsdetektor aufweist: einen Beschleunigungssensor (111), einen Temperatursensor (112), einen Linearen-Verschiebungs-Sensor (113), einen Dehnungsmessstreifen (114), einen Fahrzeug-Detektor, ein Ampel-Signal-Gerät und/oder ein Gerät, das Daten zu geplanten menschlichen Aktivitäten bereitstellt, die die überwachte Struktur (200) betreffen könnten, insbesondere Daten zu einem Fahrplan des öffentlichen Nahverkehrs.

6. Der Prozess gemäss einem der Ansprüche 1 bis 5, wobei erwähnter Referenzdefekt der überwachten Struktur (200) oder der Referenzstruktur ein bearbeiteter Referenzdefekt ist, der einen akzeptablen und/oder inakzeptablen Referenzdefekt darstellt.

7. Der Prozess gemäss einem der Ansprüche 1 bis 6, wobei
erwähnte Referenzdefektdaten (602) von der nicht-zerstörenden Defektmesseinheit (9) des Defektüberwachungssystems (1) und/oder von einer anderen nicht-zerstörenden Defektmesseinheit (6), die erwähnten Referenzdefekt erfasst, bereitgestellt werden, und/oder
erwähnte Referenzhilfsdaten (603) von demselben Hilfsdetektor (110-115), der dem Defektüberwachungssystem (1) Hilfsdaten bereitstellt, und/oder von einem anderen Hilfsdetektor (110-115), der erwähnte andere Parameter erfasst oder schätzt, bereitgestellt werden.

8. Ein Defektüberwachungssystem (1) für ein Überwachen einer Struktur (200), aufweisend:
eine nicht-zerstörende Defektmesseinheit (9) für ein Erfassen eines Defekts (208) einer überwachten Struktur (200), wobei die nicht-zerstörende Defektmesseinheit (9) einen Wirbelstromsensor (200) und/oder einen Ultraschallsensor für ein Erfassen eines metallischen Teils erwähnter Struktur (200) aufweist; wobei die nicht-zerstörende Defektmesseinheit (9) Defektdaten (652) bereitstellt;
ein Hilfsdetektionsmodul (11), welches dazu ausgelegt ist, Hilfsdaten (653) von einem Hilfsdetektor (110-115) zu sammeln, wobei der Hilfsdetektor dazu ausgelegt ist, um:
eine Kraft, die auf einen Teil der überwachten Struktur (200) einwirkt, zu messen und/oder zu schätzen; und/oder
eine Temperatur, eine Beschleunigung und/oder eine lineare Verschiebung eines Teils der überwachten Struktur (200) zu messen und/oder zu schätzen; und/oder
eine mobile Last, die auf die überwachte Struktur (200) einwirkt, zu ermitteln oder zu schätzen; und/oder
eine Terrainverschiebung und/oder eine Instabilität nahe der überwachten Struktur zu ermitteln oder zu schätzen; und/oder
eine Erosion oder Abrieb um eine Halterung der überwachten Struktur herum zu ermitteln oder zu schätzen;
eine selbstlernende Maschine (600, 650), die operativ mit der nicht-zerstörenden Defektmesseinheit (9) und mit dem Hilfsdetektionsmodul (11) verbunden ist; wobei die selbstlernende Maschine mit einem Prozess gemäss einem der Ansprüche 1 bis 7 trainiert wird, um einen Ausgangsdatensatz (655) als Antwort auf einen Eingangsdatensatz (651), der erwähnte Defektdaten (652) und erwähnte Hilfsdaten (653) aufweist, bereitzustellen, wobei der Ausgangsdatensatz (655) aufweist:
Auslöseentscheidungsdaten (656), um eine Massnahme der nicht-zerstörenden Defektmesseinheit (9) auszulösen; und/oder
eine Klassifizierung (657) des Defekts, der von der nicht-zerstörenden Defektmesseinheit (9) überwacht wird; und/oder
Alarmentscheidungsdaten (608), um einen Alarm des Defektüberwachungssystems (1) zu generieren und/oder auszulösen; und/oder
Übertragungsentscheidungsdaten (609), um eine Übertragung der Defektdaten (652), die von der nicht-zerstörenden Defektmesseinheit (9) bereitgestellt werden, für eine weitere Untersuchung auszulösen; und/oder
Übertragungsentscheidungsdaten (609), um eine Übertragung der Hilfsdaten (653), die von dem Hilfsdetektionsmodul (11) bereitgestellt werden, für eine weitere Untersuchung auszulösen.

9. Das Defektüberwachungssystem gemäss Anspruch 8, wobei der Wirbelstromsensor und/oder der Ultraschallsensor eine Vielzahl von Sensorelementen aufweisen, vorzugsweise in Form von Messspulen (101-104).

10. Das Defektüberwachungssystem gemäss Anspruch 8 oder 9, aufweisend ein Auslösemodul (12), das operativ mit der nicht-zerstörenden Defektmesseinheit (9) und mit der selbstlernenden Maschine (650) und/oder mit dem Hilfsdetektionsmodul (11) verbunden ist; wobei das Auslösemodul (12) dazu ausgelegt ist, um die nicht-zerstörende Defektmesseinheit (9) von einem ersten Betriebsmodus in einen zweiten Betriebsmodus als Funktion erwähnter Auslöseentscheidungsdaten (656), die von der selbstlernenden Maschine (650) und/oder als Antwort auf einen Vergleich einer oder mehrerer Hilfsdaten mit einem vordefinierten Schwellwert bereitgestellt werden, zu schalten.

11. Das Defektüberwachungssystem gemäss Anspruch 10, wobei im Hinblick auf eine Messung, die im ersten Modus betätigt wurde, im zweiten Modus die nicht-zerstörende Defektmesseinheit (10, 13) dazu ausgelegt ist, Messungen mit:
mehr Sensorelementen der nicht-zerstörenden Defektmesseinheit (9); und/oder
einer erhöhten Detektionssensitivität der nicht-zerstörenden Defektmesseinheit (9); und/oder
einer erhöhten Detektionssensitivität der Sensorelement der nicht-zerstörenden Defektmesseinheit (9)
zu betätigen.

12. Das Defektüberwachungssystem gemäss Anspruch 10 oder 11, wobei der erste Betriebsmodul ein Energiesparmodus ist, in dem die nicht-zerstörende Defektmesseinheit (9) dazu ausgelegt ist, keine Messung durchzuführen, und wobei der zweite Betriebsmodul ein Wachmodus ist, in dem die nicht-zerstörende Defektmesseinheit (9) dazu ausgelegt ist, Messungen durchzuführen.

13. Das Defektüberwachungssystem gemäss einem der Ansprüche 8 bis 12, wobei der Hilfsdetektor einen Beschleunigungssensor (111), einen Temperatursensor (112), einen Linearen-Verschiebungs-Sensor (113) und/oder einen Dehnungsmessstreifen (113) aufweist.

14. Das Defektüberwachungssystem gemäss einem der Ansprüche 8 bis 13, wobei der Hilfsdetektor einen Fahrzeug-Detektor (110) und/oder ein Ampel-Signal-Gerät und/oder ein Gerät, das Daten zu geplanten menschlichen Aktivitäten bereitstellt, die die Struktur betreffen könnten, insbesondere Daten zu einem Fahrplan des öffentlichen Nahverkehrs.

## Revendications

1. Procédé d'apprentissage d'une machine à apprentissage automatique (600) dans un système de surveillance (1) de défauts pour une surveillance à distance d'une structure monitorée (200) ; le système de surveillance (1) de défauts comprenant une unité de mesure de defaults non destructive (9) comprenant un capteur à courants de Foucault (109) et/ou un capteur à ultrasons pour détecter un défaut de la structure monitorée, et le système de surveillance (1) de défauts étant configuré pour collecter des données auxiliaires à partir d'un détecteur auxiliaire (110-115) ; le détecteur auxiliaire (110-115) étant configuré pour :
mesurer et/ou prévoir une force agissant sur une partie de la structure monitorée (200) ; et/ou
mesurer et/ou prévoir une température, une accélération et/ou un déplacement linéaire d'une partie de la structure monitorée (200) ; et/ou
détecter ou prévoir une charge mobile agissant sur la structure monitorée (200) ; et/ou
détecter ou prévoir un déplacement et/ou une instabilité du terrain à proximité de la structure monitorée ; et/ou
détecter ou prévoir une érosion ou un affaissement autour d'un support de la structure monitorée ;
le procédé comprenant les étapes suivantes
a) collecter un ensemble de données d'entrée (601) comprenant : des données de défaut de référence (602) d'un défaut de référence (208) de la structure monitorée (200) ou d'une structure de référence ; et des données auxiliaires de référence (603) d'autres paramètres de la même structure monitorée ou de référence ;
b) construire un ensemble de données d'apprentissage (604) en associant lesdites données de défaut de référence (602) et/ou lesdites données auxiliaires de référence (603) en tant qu'ensemble d'entrée avec un ensemble de données cible d'apprentissage (605) correspondant ;
c) entraîner la machine à apprentissage automatique (600) du système de surveillance (1) de défauts avec ledit ensemble de données d'apprentissage (604) ;
dans lequel l'ensemble de données cibles d'apprentissage (605) comprend
des données de décision (606) pour déclencher une mesure à partir de l'unité de mesure de défauts non destructive (9) du système de surveillance (1) de défauts, et/ou
une classification (607) du défaut de référence de la structure monitorée ou de référence (200), et/ou
des données de décision (608) pour générer et/ou déclencher une alarme du système de surveillance (1) de défauts ; et/ou
des données de décision (609) pour déclencher une transmission de données de défauts fournies par la unité de mesure de défauts non destructive (9) du système de surveillance (1) de défauts pour un examen supplémentaire ; et/ou
des données de décision (609) pour déclencher une transmission de données auxiliaires fournies par le détecteur auxiliaire (110-115) pour un examen plus approfondi.

2. Le procédé selon la revendication 1, dans lequel lesdites données de décision (606) pour déclencher une mesure à partir de l'unité de mesure de défauts non destructive (9) comprennent des données de décision pour commuter l'unité de mesure de défauts non destructive (9) d'un premier mode de fonctionnement à un second mode de fonctionnement.

3. Le procédé selon la revendication 2, le premier mode de fonctionnement étant un mode d'alimentation en veille dans lequel l'unité de mesure de défauts non destructive (9) est configurée pour n'effectuer aucune mesure, et le second mode de fonctionnement étant un mode éveillé dans lequel l'unité de mesure de défauts non destructive (9) est configurée pour effectuer des mesures.

4. Le procédé selon l'une quelconque des revendications 1 à 3, dans lequel le capteur à courants de Foucault et/ou à ultrasons comprend une pluralité d'éléments de détection (101-104).

5. Le procédé selon la revendication 1, dans lequel le détecteur auxiliaire comprend : un accéléromètre (111), un capteur de température (112), un capteur de déplacement linéaire (113), une jauge de contrainte (114), un détecteur de véhicule, un dispositif de signalisation de feux de circulation et/ou un dispositif fournissant des données sur des activités humaines planifiées qui pourraient affecter la structure monitorée (200), en particulier sur un horaire d'un service de transport public.

6. Le procédé selon l'une quelconque des revendications 1 à 5, dans lequel ledit défaut de référence de la structure monitorée ou de référence (200) est un défaut de référence usiné représentant un défaut acceptable et/ou inacceptable.

7. Le procédé selon l'une quelconque des revendications 1 à 6,
lesdites données de défaut de référence (602) étant fournies par l'unité de mesure de défauts non destructive (9) du système de surveillance de défaut (1) et/ou par une autre unité de mesure de défauts non destructive (9) détectant ledit défaut de référence, et/ou
lesdites données auxiliaires de référence (603) étant fournies par le même détecteur auxiliaire (110-115) fournissant des données auxiliaires au système de surveillance des défauts (1) et/ou par un autre détecteur auxiliaire (110-115) détectant ou prédisant lesdits autres paramètres.

8. Système de surveillance de défauts (1) pour surveiller une structure (200), comprenant :
une unité de mesure de défauts non destructive (9) pour détecter un défaut (208) d'une structure monitorée (200), l'unité de mesure de défauts non destructive (9) comprenant un détecteur à courants de Foucault (109) et/ou un détecteur à ultrasons pour détecter une partie métallique de ladite structure (200) ; l'unité de mesure de défauts non destructive (9) fournissant des données de défauts (652) ;
un module de détection auxiliaire (11) configuré pour collecter des données auxiliaires (653) à partir d'un détecteur auxiliaire (110-115), le détecteur auxiliaire étant configuré pour :
mesurer et/ou prévoir une force agissant sur une partie de la structure monitorée (200) ; et/ou
mesurer et/ou prévoir une température, une accélération et/ou un déplacement linéaire d'une partie de la structure monitorée (200) ; et/ou
détecter ou prévoir une charge mobile agissant sur la structure monitorée (200) ; et/ou
détecter ou prévoir un déplacement et/ou une instabilité du terrain à proximité de la structure monitorée ; et/ou
détecter ou prédire une érosion ou un affaissement autour d'un support de la structure monitorée ;
une machine à apprentissage automatique (600, 650) connectée de manière opérationnelle à l'unité de mesure de défauts non destructive (9) et au module de détection auxiliaire (11); la machine à apprentissage automatique étant entraînée par un procédé selon l'une quelconque des revendications 1 à 7 de manière à fournir un ensemble de données de sortie (655) en réponse à un ensemble de données d'entrée (651) comprenant lesdites données de défauts (652) et lesdites données auxiliaires (653), dans lequel l'ensemble de données de sortie (655) comprend :
des données de décision de déclenchement (656) pour déclencher une mesure à partir de l'unité de mesure de défauts non destructive (9),et/ou
une classification (657) du défaut surveillé par l'unité de mesure de défauts non destructive (9) ; et/ou
des données de décision d'alarme (608) pour générer et/ou déclencher une alarme du système de surveillance de défauts (1) ; et/ou
des données de décision de transmission (609) pour déclencher une transmission des données de défaut (652) fournies par l'unité de mesure de défauts non destructive (9) pour un examen supplémentaire ; et/ou
des données de décision de transmission (609) pour déclencher une transmission des données auxiliaires (653) fournies par le module de détection auxiliaire (11) pour un examen plus approfondi.

9. Le système de surveillance de défauts selon la revendication 8, le capteur à courants de Foucault et/ou un capteur à ultrasons comprenant une pluralité d'éléments de détection, de préférence sous la forme de bobines de mesure (101-104).

10. Le système de surveillance de défauts selon la revendication 8 ou 9, comprenant un module de déclenchement (12) connecté de manière opérationnelle à l'unité de mesure de défauts non destructive (9) et à la machine à apprentissage automatique (650) et/ou au module de détection auxiliaire (11);
le module de déclenchement (12) étant configuré pour faire passer l'unité de mesure de défauts non destructive (9) d'un premier mode de fonctionnement à un second mode de fonctionnement en fonction desdites données de décision de déclenchement (656) fournies par la machine à apprentissage automatique (650) et/ou en réponse à une comparaison d'une ou plusieurs desdites données auxiliaires avec un seuil prédéfini.

11. Le système de surveillance de défauts selon la revendication 10, dans lequel, par rapport aux mesures effectuées dans le premier mode, dans le second mode, l'unité de mesure de défauts non destructive (10, 13) est configurée pour effectuer des mesures avec :
un plus grand nombre d'éléments de détection de l'unité de mesure de défauts non destructive (9) ; et/ou
une sensibilité de détection accrue de l'unité de mesure de défauts non destructive (9) ; et/ou
une sensibilité de détection accrue des éléments de détection de l'unité de mesure de défauts non destructive (9).

12. Le système de surveillance de défauts selon la revendication 10 ou 11, le premier mode de fonctionnement étant un mode d'alimentation en veille dans lequel l'unité de mesure de défauts non destructive (9) est configurée pour n'effectuer aucune mesure, et le second mode de fonctionnement étant un mode éveillé dans lequel l'unité de mesure de défauts non destructive (9) est configurée pour effectuer des mesures.

13. Le système de surveillance de défauts selon l'une quelconque des revendications 8 à 12, le détecteur auxiliaire comprenant un accéléromètre (111), un capteur de température (112), un capteur de déplacement linéaire (113) et/ou une jauge de contrainte (114).

14. Le système de surveillance de défauts selon l'une quelconque des revendications 8 à 13, le détecteur auxiliaire comprenant un détecteur de véhicules (110) et/ou un dispositif de signalisation de feux de circulation et/ou un dispositif fournissant des données sur des activités humaines planifiées qui pourraient affecter la structure, en particulier sur un horaire d'un service de transport public.
